# NEUE EUROPÄISCHE PATENTSCHRIFT

(11) **EP 0 877 664 B2**
(45) Veröffentlichungstag und Bekanntmachung des Hinweises auf die Entscheidung über den Einspruch: **24.06.2009**
(45) Hinweis auf die Patenterteilung: 23.06.1999
(21) Anmeldenummer: 96931800.5
(22) Anmeldetag: 13.09.1996
(51) Int. Cl.: B32B 17/10, C03C 27/12

(54) **VERFAHREN ZUR HERSTELLUNG EINER VON VERWERFUNGSBEDINGTEN OPTISCHEN STÖRUNGEN FREIEN VERBUNDSICHERHEITSGLASSCHEIBE, VERWENDUNG EINER BESONDEREN TRÄGERFOLIE FÜR DIE HERSTELLUNG DER VERBUNDSICHERHEITSGLASSCHEIBE SOWIE FÜR DAS VERFAHREN BZW. DIE VERWENDUNG BESONDERS GEEIGNETE TRÄGERFOLIEN**
METHOD FOR PRODUCING A LAMINATED GLASS PANE FREE OF OPTICAL OBSTRUCTION CAUSED BY WARPING, USE OF A PARTICULAR CARRIER FILM FOR THE PRODUCTION OF THE LAMINATED GLASS PANE AND CARRIER FILMS PARTICULARLY SUITABLE FOR THE METHOD OR THE USE
PROCEDE DE PRODUCTION D'UNE PLAQUE DE VERRE FEUILLETE EXEMPTE D'OBSTRUCTION OPTIQUE DUE A UN GAUCHISSEMENT, UTILISATION D'UN FILM PORTEUR PARTICULIER POUR LA PRODUCTION DE CETTE PLAQUE DE VERRE FEUILLETE ET FILMS PORTEURS CONVENANT PARTICULIEREMENT AUDIT PROCEDE ET A LADITE UTILISATION

(30) Priorität: 16.09.1995 DE 19534420
(43) Veröffentlichungstag der Anmeldung: 18.11.1998
(73) Patentinhaber: PILKINGTON Automotive Deutschland GmbH, 58455 Witten (DE)
(72) Erfinder: COSTA, Peter, D-58455 Witten (DE)
(74) Vertreter: Albrecht, Rainer Harald
(86) Internationale Anmeldenummer: PCT/EP1996/004018
(87) Internationale Veröffentlichungsnummer: WO 1997/010099

(56) Entgegenhaltungen:
- EP-A- 0 077 672
- EP-A- 0 457 209
- US-A- 3 891 486
- US-A- 5 091 258

## Beschreibung

Die Erfindung betrifft ein Verfahren zur Herstellung einer von verwerfungsbedingten optischen Störungen im reflektierten und durchfallenden Licht freien gebogenen, insbes komplex gebogenen Verbundsicherheitsglasscheibe mit einer ersten Glasscheibe, einer zweiten Glasscheibe und einer mehrschichtigen Zwischenlage, welche Zwischenlage in Form eines Folienlaminates aus einer ersten Verbundfolie, einer mit einem Dünnschichtsystem versehenen, biaxial verstreckten thermoplastischen Trägerfolie und einer zweiten Verbundfolie besteht. Der Erfindung betrifft fernerhin die Verwendung einer Trägerfolie für die Herstellung der Verbundsicherheitsglasscheibe sowie eine für das Verfahren bzw. die Verwendung besonders geeignete. Trägerfolie. Gebogene Verbundsicherheitsglasscheiben bezeichnet im Rahmen der Erfindung einfach gekrümmte und insbesondere doppelt gekrümmte (sphärisch gebogene) Verbundsicherheitsglasscheiben und auch sogenannte komplex gebogene Verbundsicherheitsglasscheiben, die zumindest in Teilbereichen große Krümmungen, d. h. kleine Krümmungsradien, aufweisen. Komplex gebogene Verbundsicherheitsglasscheiben werden insbesondere als Windschutzscheiben oder Heckscheiben von Kraftfahrzeugen eingesetzt.

Bei den beschriebenen Verbundsicherheitsglasscheiben bildet das Dünnschichtsystem eine sog. Funktionsschicht Diese dient dazu, die Verbundsicherheitsgtasscheiben so einzurichten, daß sie weitere Funktionen erfüllen können. Zu diesen Funktionen gehören unter anderem die Beheizbarkeit, die Veränderung des Licht- und Energiedurchlaßgrades bzw. des Reflexionsvermögens und die Ausrüstung mit Antennen für die verschiedensten Anwendungen. Der Aufbau der Donnschichtsysteme und deren Herstellung sind bekannt und bewährt. Besonders geeignet sind Dünnschichtsysteme auf Basis von Silberschichten oder halbleitenden Metalloxidschichten. Diese Dünnschichtsysteme werden mit Hilfe einer transparenten thermoplastischen Trägerfolie in die Verbundsicherheitsglasscheibe integriert. - Zum Stand der Technik wird insoweit zum Beispiel auf die WO 90/08334 verwiesen, die bekannte Trägerfolien, bewährte Dünnschichtsysteme und auch übliche Verbundfolien beschreibt.

Verbundsicherheitsglasscheiben des eingangs beschriebenen Aufbaus zeigen häufig optische Störungen, insbesondere im reflektierten Licht. Diese optischen Störungen beruhen auf Phänomenen, die auf Wellenbildungen in den Trägerfolien zurückgeführt werden. Die optischen Störungen treten bei gebogenen, insbesondere bei komplex gebogenen Verbundsicherheitsglasscheiben, auf.

Die bekannten Maßnahmen, von denen die Erfindung ausgeht (EP 0 077 672), betreffen einen selektiv lichtdurchlässigen oder elektrisch leitenden Film auf einer Trägerfolie, die eine Dicke im Bereich von 12 bis 125 µm aufweist und nach einer Wärmebehandlung bei 120° C über 30 Minuten eine Wärmeschrumpfung zeigt, die von der Dicke der Trägerfolie in komplizierte Weise abhängig ist. Auf diese Weise sollen optische Störungen in einer Verbundsicherheitsglasscheibe vermieden werden, in welche die Trägerfolie mit dem Dünnschichtsystem integriert ist. Die Verbundsicherheitsglasscheibe kann auch hier gebogen sein. Versuche haben gezeigt, daß die nach dieser Lehre erreichbaren Ergebnisse der Kritik offen sind. Die eingangs beschriebenen Probleme, die auch bei komplex gebogenen Verbundsicherheitsglasscheiben, insbesondere im Bereich kleiner Krümmungsradien, auftreten, werden nicht behandelt.

Um zu verhindern, daß eine mit einem Dünnschichtsystem versehene Trägerfolie, insbesondere eine solche aus Polyethylenterephthalat, die in eine Verbundsicherheitsglasscheibe des beschriebenen Aufbaus integriert ist, bei der Herstellung der Verbundsicherheitsglasscheibe ihre Eigenschaften verändert und dadurch optische Störungen erzeugt, ist es bekannt (EP 0 457 209 A2), die Trägerfolie bei Temperaturen oberhalb der sogenannten Glastemperatur biaxial zu verstrecken, danach einer Thermofixierung zu unterwerfen und nach der Thermofixierung eine weitere Verstreckung bei Temperaturen unterhalb der Glastemperatur durchzuführen. Die insoweit bekannten Maßnahmen sind aufwendig, das Ergebnis ist unbefriedigend. Die eingangs beschriebenen Probleme werden nicht behandelt.

Der Erfindung liegt das technische Problem zugrunde, einfache und für eine industrielle Serienfertigung der Verbundsicherheitsglasscheibe geeignete Maßnahmen anzugeben, mit denen als auch gebogene Verbundsicherheitsglasscheiben des eingangs beschriebenen Aufbaus hergestellt werden können, die optische Störungen im reflektierten und/oder durchfallenden Licht nicht aufweisen.

Zur Lösung dieses technischen Problems ist Gegenstand der Erfindung das Verfahren nach Patentanspruch 1.

Die zur Lehre der Erfindung gehörende Entlüftung ist üblich und erforderlich, um in der Verbundsicherheitsglasscheibe Störungen durch Lufteinschlüsse zu vermeiden. Die Entlüftung muß sowohl in bezug auf die Verbundsicherheitsglasscheibe insgesamt als auch in bezug auf das Folienlaminat aus Verbundfolien und Trägerfolien wirksam und ausreichend erfolgen. Das Merkmal 1.2) versteht sich dahingehend, daß die bei der Herstellung von Verbundsicherheitsglas übliche Verbundtechnologie angewendet wird. Der Verfahrensschritt gemäß Merkmal 1.1) beinhaltet die Möglichkeit, ein Vorlaminat aus der ersten Verbundfolie und der Trägerfolie sowie ggf. der zweiten Verbundfolie herzustellen. Die vorzulaminierenden Folien werden in diesem Falle insbesondere von Vorratsrollen abgezogen und unter Anwendung von Druck und Wärme unter gleichzeitiger oder vorheriger Entlüftung miteinander verbunden, bevor die so hergestellten Vorlaminate zugeschnitten und zwischen die beiden Glasscheiben gelegt werden.

Im einzelnen bestehen im Rahmen der Erfindung mehrere Möglichkeiten für die Durchführung des erfindungsgemäßen Verfahrens. Nach einer bevorzugten Ausführungsform der Erfindung wird auf die erste Glasscheiben ein Vorlaminat aus der ersten Verbundfolie und der Trägerfolie aufgebracht und darauf die zweite. Verbundfolie aufgelegt. Diese Verfahrensweise ist dann zu empfehlen, wenn eine nicht als Rollenware verfügbare zweite Verbundfolie zum Einsatz gelangt, wie es bei der Verwendung von entsprechend der Form von Windschutzscheiben gereckten Verbundfolien mit Blendschutzkeil bekannt ist. Handelt es sich um die Herstellung gebogener Verbundsicherheitsglasscheiben, so wird man auf die konkave Seite der ersten Glasscheibe das Vorlaminat aufbringen. Nach dem Aufbringen des Vorlaminates kann eine Vorverpressung unter Anwendung von Druck und Wärme durchgeführt und danach die zweite Verbundfolie aufgebracht und verpreßt werden. Im Rahmen der Erfindung liegt es, mit einem Vorlaminat zu arbeiten, welches eine erste Verbundfolie, die mit dem Dünnschichtsystem versehene Trägerfolie und die zweite Verbundfolie aufweist. Man kann aber auch so vorgehen, daß auf die erste Glasscheibe die erste Verbundfolie, die Trägerfolie und die zweite Verbundfolie aufgebracht und danach die Verpressung des gesamten Laminates durchgeführt wird. Handelt es sich um die Herstellung gebogener Verbundsicherheitsglasscheiben, so wird man die erste Verbundfolie auf die konkave Seite der ersten Glasscheibe aufbringen. Obwohl es sich im Rahmen der erfindungsgemäßen Maßnahmen empfiehlt, wie beschrieben zu arbeiten, kann bei der Herstellung gebogener Verbundsicherheitsglasscheiben auch umgekehrt verfahren und die Verbundfolie oder das Vorlaminat auf die konvexe Seite der ersten Glasscheibe aufgebracht werden. Es ist stets darauf zu achten, daß nicht bereits bei diesem Aufbringen in einer Verbundfolie oder in der Trägerfolie eine Faltenbildung auftritt.

Bei dem erfindungsgemäßen Verfahren werden sowohl störende Verformungen in der Trägerfolie als auch Zerstörungen des Dünnschichtsystems vermieden oder unterdrückt. Die Erfindung geht von der Erkenntnis aus, daß die beschriebenen optischen Störungen im reflektierten Licht auf Verwerfungen zurückzuführen sind. Es handelt sich dabei um Verwerfungen mit Amplituden im Mikrometerbereich. Diese Verwerfungen entstehen bei unsachgemäßer Handhabung und bei der Verwendung von ungeeigneten Trägerfolien im Rahmen der Anwendung der üblichen Verbundverfahren, also insbesondere bei den erforderlichen Entlüftungsprozessen und bei der Anwendung von Druck und Wärme zur Verbindung der Bestandteile der Verbundsicherheitsglasscheiben untereinander. Die Gefahr der Entstehung solcher Falten ist besonders groß, wenn gebogene, insbesondere komplex gebogene Glasscheiben hergestellt werden. Hat sich die Trägerfolie im Zuge der Herstellung des Verbundsicherheitsglases in Falten gelegt, so zeigt sich dies hauptsächlich bei der Betrachtung der Reflexion.

Optische Störungen im durchfallenden und insbesondere im reflektierten Licht werden bei Durchführung des erfindungsgemäßen Verfahrens überraschenderweise vermieden. Der Stand der Technik läßt nicht vermuten, daß die Erfindung dieses leistet, und zwar in bezug auf die Herstellung von gebogenen und komplex gebogenen Verbundsicherheitsglasscheiben. Das gilt auch dann, wenn die komplexen Biegungen so groß sind, daß bei der Anpassung der Trägerfolie mit dem Dünnschichtsystem an diese Biegungen beachtliche Verwerfungen befürchtet werden müssen. Das gilt grundsätzlich für alle Verbundfolien, die zur Herstellung von Verbundsicherheitsglasscheiben heute üblich sind, und für alle üblichen Trägerfolien mit Dünnschichtsystem. Als Verbundfolien kommen insbesondere Folien auf Basis von Polyvinylbutyral, Ethylenvinylacetat, Polyurethan und Polyvinylchlorid infrage, während geeignete Trägerfolien vor allem aus Polyestern und deren Derivaten, insbesondere aus Polyethylenterephthalaten, bestehen. Andere Materialien für die Trägerfolie können Celluloseester oder Acrylpolymere sowie Polycarbonate und Polyvinylfluoride sein. Dabei sind die Materialien so auszuwählen, daß sie eine formstabile Unterlage für das Dünnschichtsystem bilden, daß sie kompatibel mit den Verbundfolien sind und ausreichend an diesen haften. Sie müssen außerdem den Verbundprozeß schadlos überstehen, mit dem Dünnschichtsystem verträglich, transparent und UV-stabil sein.

Die Trägerfolie kann unschwer so verstreckt werden, daß die angegebenen Wärmeschrumpfungseigenschaften vor der Herstellung der Verbundsicherheitsglasscheiben sichergestellt ist. Entsprechende Verfahren sind bekannt. Zur Herstellung von für das erfindungsgemäße Verfahren geeigneten Trägerfolien werden die Ausgangsfolien bei Temperaturen oberhalb der sog. Glastemperatur biaxial um 1 % und mehr verstreckt, wonach die Verstreckung thermofixiert wird. Wichtig ist es, das Verfahren zum Aufbringen des Dünnschichtsystems so zu führen, daß die Trägerfolie allenfalls geringfügig schrumpft, damit ein Schrumpfungsverhalten entsprechend dem Merkmal 1.12) auch noch nach der Beschichtung und vor dem Einsatz im Rahmen des erfindungsgemäßen Verfahrens vorliegt. Gegebenenfalls muß für eine ausreichende Kühlung der Trägerfolie bei der Beschichtung gesorgt oder diese mechanisch eingespannt werden. Überraschenderweise führt die für die Sicherstellung der Wärmeschrumpfung gemäß Merkmal 1.12) erforderliche Verstreckung der Trägerfolie in beiden Richtungen bei den fertigen Verbundsicherheitsglasscheiben nicht zu störenden Doppelbrechungseffekten. Die einzelnen Glasscheiben der erfindungsgemäßen Verbundsicherheitsglasscheibe haben die gebräuchlichen Dicken. Sie könnten aus normalgekühltem oder chemisch oder thermisch vorgespanntem Glas bestehen. Auch teilvorgespannte Glasscheibe sind einsetzbar.

Die beschriebenen, für die Erfindung wesentlichen Effekte werden bei üblichen Dicken der Verbundfolien erreicht. Diese liegen im Bereich von 0,38 mm oder einem Vielfachen davon. Vorzugsweise wird auf die erste Verbundfolie eine Trägerfolie aufgelegt, die eine Dicke von 40 bis 60 µm, vorzugsweise von etwa 50 µm aufweist. Je nach den eingesetzten Werkstoffen und den Temperaturen bzw. Preßzeiten beim Verpressen sind besondere Maßnahmen, die den Verbund zwischen den Verbundfolien und der Trägerfolie sicherstellen, nicht erforderlich. Zu einem besonders innigen Verbund in diesem Folienlaminat kommt man jedoch, wen auf die erste Verbundfolie eine mit dem Dünnschichtsystem versehene Trägerfolie aufgelegt wird, die auf beiden Oberflächen eine Oberflächenenergie von mindestens 40 mJ/m² aufweist Hierzu kann die Trägerfolie auf der unbeschichteten Seite beispielsweise einer Corona- oder Plasma-Behandlung ausgesetzt werden.

Die angegebenen zahlenmäßige Parameter sind besonders vorteilhaft und weitgehend optimal, wenn mit Verbundfolien aus Polyvinylbutyral (PVB) oder Ethylenvinylacetat-Copolymeren (EVA) und mit einer Trägerfolie aus Polyethylenterephthalat (PET) gearbeitet wird. Die Verpressung gemäß Merkmal 1.2) wird man regelmäßig bei einer Temperatur im Temperaturbereich von 120 bis 130° C durchführen, und zwar mit einem Druck von bis zu 13 bar. Auf die stets vor der Herstellung eines Verbundes oder eines Vorlaminates erforderliche Entlüftung wird noch einmal verwiesen. Die Entlüftung kann mit üblichen Mitteln wie Gliederwalzen, Vakuumsack oder Vakuumlippen erfolgen.

Erfindungsgemäß werden besonders eingerichtete, mit dem Dünnschichtsystem versehene Trägerfolien für einen besonderen Zweck, nämlich für die Herstellung von von verwerfungsbedingten optischen Störungen freien gebogenen und komplex gebogenen Verbundsicherheitsglasscheiben, verwendet. Das gelingt wegen der für die Erfindung bedeutungsvollen Maßgaben 1.11), 1.12). Das gilt auch in bezug auf die beschriebenen Vorlaminate (Duplett/Triplett). Anders ausgedrückt ist Gegenstand der Erfindung zur Lösung des angegebenen technischen Problems auch die vorstehend beschriebene Verwendung entsprechend den Patentansprüchen 9 bis 12. Die beschriebene und beanspruchte Verwendung kann auch in Form der Vorlaminate erfolgen, die aus einer Verbundfolie und der Trägerfolie sowie ggf. der zweiten Verbundfolie bestehen. Werden gebogene und insbesondere komplex gebogene Verbundsicherheitsglasscheiben hergestellt, so erfahren die Foliensysteme, neben den Einflüssen von Druck und Temperatur, äußere Kräfte, welche die Anpassung der ursprünglich ebenen Folien des Foliensystems an die einfache oder doppelte Krümmung der herzustellenden Verbundsicherheitsglasscheiben bewirken. Diese Kräfte Iösen bei der Herstellung von gebogene Verbundsicherheitsglasscheiben doppelter Krümmung gleichsam Stauchungsphänomene aus. Das gilt insbesondere bei der Herstellung von komplex gebogenen Verbundsicherheitsglasscheiben. Hinzu kommen Verformungen aus inneren Kräften, welche die Folien der Foliensysteme gleichsam mitbringen. Diese Kräfte können bei der Herstellung gebogener Verbundsicherheitsgiasscheiben mit einfacher Krümmung Schuberscheinungen auslösen, wobei auch hier die Einflüsse der inneren Kräfte hinzukommen. Ähnlich liegen die Verhältnisse bei der Herstellung von ebenen Verbundsicherheisglasscheiben.

Überraschenderweise löst die Lehre der Erfindung in allen Fällen das der Erfindung zugrundeliegende technische Problem. Das gilt auch, wenn mechanische Einflüsse (Bildung von Luftströmungskanälen) bei der Entlüftung hinzukommen.

Zur Erfindung gehören auch Trägerfolien, die für das beschriebene Verfahren bzw. die beschriebene Verwendung besonders geeignet sind. Diese Trägerfolien sind Gegenstand der Patentansprüche 13 bis 17.

Im folgenden wird die Erfindung anhand eines Ausführungsbeispiels ausführliche erläutert. Das Ausführungsbeispiel bezieht sich, ohne Beschränkung, auf die Herstellung von komplex gebogenen Verbundsicherheitsglasscheiben.

Eine 0,38 mm dicke, beidseitig genarbte PVB-Verbundfolie der Firma Monsanto, eine PET-Trägerfolie mit einer hoch lichtdurchlässigen Sonnenschutzschicht mit einer Doppelsilberschicht (Produktbezeichnung XIR 75) der Firma Southwall sowie eine zweite 0,38 mm dicke, beidseitig genarbte PVB-Verbundfolie der Firma Monsanto wurden von Rollen abgezogen und bei etwa 60 bis 70° C zwischen einem Walzenpaar zu einem entlüfteten und teilverklebten Vorlaminat verbunden und anschließend auf passende Maße zugeschnitten.

Die beschichtete PET-Trägerfolie war vor dem Beschichten biaxial gereckt und thermofixiert worden. Die Verstreckung und Beschichtung war unter solchen Bedingungen erfolgt, daß die PET-Trägerfolie nach der Beschichtung und vor der Herstellung des Vorlaminats das folgende Wärmeschrumpfverhalten aufwies: - Die beschichtete PET-Trägerfolie schrumpft während eines 20 Sekunden dauernden Untertauchens in einem auf 120 °C aufgeheizten Flüssigkeitsbad aus Polyethylenglykol (Molekulargewicht etwa 400) in der Folienebene parallel und senkrecht zur Längserstreckung um etwa 0,4 %. Die Messung der Schrumpfung erfolgt dabei so, daß zwischen die Backen einer Längenmeßeinrichtung beide Enden eines Folienstreifens der Länge 150 mm und der Breite von 15 mm eingeklemmt werden. Die Länge des Folienstreifens wird vor dem Eintauchen in das Temperaturbad und nach Beendigung der Wärmebehandlung bei gleicher Ausgangstemperatur gemessen. Daraus errechnet sich die prozentuale Längenänderung als Schrumpfmaß bei vorgegebener Schrumpftemperatur und Verweildauer.

Die beschichtete PET-Trägerfolie wies zur Sicherstellung einer ausreichenden Haftung zu den Verbundfolien auf beiden Seiten eine Oberflächenenergie von mehr als 40 mJ/m² auf.

Das wie beschrieben hergestellte Vorlaminat wurde faltenfrei auf die konkave Seite einer komplex gebogenen Glasscheibe mit einer Dicke von 2,1 mm aufgelegt. Die Glasscheibe war sowohl in Längs- wie auch in Querrichtung gebogen und wies stark gekrümmte Seitenteile auf. Sie war entlang ihres Randes mit einem aufgedruckten und eingebrannten opaken Sichtschutzstreifen versehen. Danach wurde eine zweite komplex gebogene Glasscheibe, mit einer Dicke von 1,5 mm, deren Biegung derjenigen der ersten Glasscheibe entsprach, auf das Vorlaminat aufgelegt. Die über den Rand der Glasscheiben überstehenden Ränder des Vorlaminats wurden abgeschnitten. Um die Scheibenkante wurde, wie aus der Herstellung von gebogenem Verbundsicherheitsglas allgemein bekannt, ein an ein Unterdrucksystem angeschlossenes Lippenprofil zum Zwecke der Entlüftung herumgelegt.

In dem folgenden Entlüftungsprozeoß wurde das Lippenprofil etwa 20 Minuten mit Unterdruck beaufschlagt und das Glas-Folien-Paket dadurch entlüftet. Anschließend wurde es unter Aufrechterhaltung des Unterdrucks in einem Autoklaven mit Hilfe einer etwa halbstündigen Wärmebehandlung bei einer Maximaltemperatur von etwa 100° C vorverbunden. Hieran schloß sich nach zwischenzeitlicher Abkühlung der eigentliche Verbundprozeß in einem Autoklaven an mit einer Aufheizung des vorverbundenen Glas-Folien-Paketes auf etwa 125° C und einer Druckbehandlung bei bis zu 13 bar.

Das fertige Verbundsicherheitsglas wurde nach der Entnahme aus dem Autoklaven einer Kontrolle der Reflexions- und Transmissionsoptik unterworfen. Auch im Bereich der stärker gebogenen Seitenteile der Glasscheibe war die beschichtete PET-Trägerfolie praktisch faltenfrei und entsprach die Glasscheibe den strengen Anforderungen an Front- oder Heckscheiben von Kraftfahrzeugen hinsichtlich Sicherheitseigenschaften und Reflexions-/Transmissionsoptik.

Vergleichsversuche mit beschichteten Trägerfolien, deren Wärmeschrumpfverhalten deutlich außerhalb des erfindungsgemäß beanspruchten Bereichs lag, die also bei einer Wärmebehandlung bei 120 °C über 20 Sekunden weniger als 0,3 % schrumpften, führten nicht zu Verbundsicherheitsglas, welches von den beschriebenen optischen Störungen frei war, was sich insbesondere in einem störenden Waschbretteffekt in der Reflexionsoptik der Glasscheiben bemerkbar machte. Bei der Verwendung von Trägerfolien, die deutlich mehr als 0,8 % schrumpften, wurde der sogenannte Orangenhauteffekt beobachtet, der durch die Bildung von irregulären Erhebungen und Vertiefungen in der Trägerfolie entsteht. Ebenfalls führten Versuche mit Trägerfolien, die außerhalb des beanspruchten Dickenbereichs lagen, zu insgesamt nicht befriedigenden Ergebnissen.

## Patentansprüche

1. Verfahren zur Herstellung einer von verwerfungsbedingten optischen Störungen im reflektierten und/oder durchfallenden Licht freien gebogenen, insbes. komplex gebogenen Verbundsicherheitsglasscheibe mit einer ersten Glasscheibe, einer entsprechenden zweiten Glasscheibe und einer mehrschichtigen Zwischenlage, welche Zwischenlage in Form eines Folienlaminates aus einer ersten Verbundfolie, einer mit einem Dünnschichtsystem versehenen, biaxial verstreckten thermoplastischen Trägerfolie und einer zweiten Verbundfolie besteht, mit den Merkmalen:
1.1) Auf die erste Verbundfolie wird eine mit dem Dünnschichtsystem versehene Trägerfolie aufgelegt, die
1.11) eine Dicke von 30 bis 70 µm und
1.12) in den beiden Verstreckungsrichtungen einen Wärmeschrumpfungsgrad von 0,3 bis 0,6 % gemessen nach einer Wärmebehandlung von 20 sek bei 120° C,
aufweist, - und auf die Trägerfolie wird die zweite Verbundfolie aufgelegt,
1.2) die Folien gemäß Merkmal 1.1) werden faltenfrei zwischen den beiden Glasscheiben angeordnet und unter Anwendung von Druck und Wärme verpresst sowie mit den Glasscheiben verbunden,
wobei im Rahmen der Maßnahmen gemäß 1.1) und/oder 1.2) zumindest eine Entlüftung durchgeführt wird.

2. Verfahren nach Anspruch 1, wobei auf die erste Glasscheibe ein Vorlaminat aus der ersten Verbundfolie und der Trägerfolie aufgebracht und darauf die zweite Verbundfolie aufgelegt wird.

3. Verfahren nach Anspruch 2, wobei nach dem Aufbringen des Vorlaminates eine Vorverpressung unter Anwendung von Druck und Wäre durchgeführt und daraufhin die zweite Verbundfolie aufgebracht und verpresst wird.

4. Verfahren nach Anspruch 1, wobei die erste Glasscheibe die erste Verbundfolie, die Trägerfolie und zweite Verbundfolie oder ein Vorlaminat aus diesen Folien, aufgebracht und danach die Verpressung durchgeführt wird.

5. Verfahren nach einem der Ansprüche 1 bis 4, wobei auf die erste Verbundfolie eine Trägerfolie aufgelegt wird, die eine Dicke von 40 µm bis 60 µm, vorzugsweise von etwa 50 µm, aufweist.

6. Verfahren nach einem der Ansprüche 1 bis 5, wobei auf die erste Verbundfolie eine mit dem Dünnschichtsystem versehene Trägerfolie aufgelegt wird, die auf beiden Oberflächen eine Oberflächenenergie von mindestens 40 mJ/m² aufweist.

7. Verfahren nach einem der Ansprüche 1 bis 6, wobei mit Verbundfolien auf Basis von Polyvinylbutyral oder Ethylenvinylacetat und mit einer Trägerfolie aus Polyethylenterephthalat gearbeitet wird.

8. Verfahren nach einem der Ansprüche 1 bis 7, wobei die Verpressung gemäß Merkmal 1.1) bei einer Temperatur im Temperaturbereich von 115 bis 135°C mit einem Druck von maximal 13 bar durchgeführt wird.

9. Verwendung einer mit einem Dünnschichtsystem versehenen Trägerfolie aus verstrecktem thermoplastischen Kunststoff, die eine Dicke von 30 bis 70 µm sowie eine biaxiale Verstreckung aufweist,
für die Herstellung von Verbundsicherheitsglasscheiben, insbesondere zur Herstellung von von verwerfungsbedingten optischen Störungen im reflektierten und/oder durchfallenden Licht freien Verbundsicherheitsglasscheiben mit einer ersten Glasscheibe, einer entsprechenden zweiten Glasscheibe und einer mehrschichtigen Zwischenlage in Form eines Folienlaminates aus einer ersten Verbundfolie, der biaxial verstreckten Trägerfolie und einer zweiten Verbundfolie
mit der Maßgabe, dass die Trägerfolie in den beiden Verstreckungsrichtungen einen Wärmeschrumpfungsgrad von 0,3 bis 0,6 %, gemessen nach einer Wärmebehandlung von 20 Sekunden bei 120°C, aufweist.

10. Verwendung nach Anspruch 9 mit der Maßgabe, dass die Trägerfolie eine Dicke von 40 bis 60 µm, vorzugsweise von etwa 50 µm aufweist.

11. Verwendung nach einem der Ansprüche 9 bis 10 mit der Maßgabe, dass die Trägerfolie auf beiden Oberflächen eine Oberflächenenergie von zumindest 40 mJ/m² aufweist.

12. Verwendung nach einem der Ansprüche 9 bis 11 mit de Maßgabe, dass die Trägerfolie aus Polyethylenterephthalat besteht. .

13. Mit einem Dünnschichtsystem versehene, verstreckte Trägerfolie aus thermoplastischem Kunststoff für die Durchführung des Verfahrens nach einem der Ansprüche 1 bis 8, die eine Dicke von 30 bis 70 µm und in den beiden Verstreckungsrichtungen einen Wärmeschrumpfungsgrad von 0,3 bis 0,6 %, gemessen nach einer Wärmebehandlung von 20 Sekunden bei 120°C, aufweist.

14. Mit einem Dünnschichtsystem versehene, verstreckte Trägerfolie aus thermoplastischem Kunststoff für die Verwendung nach einem der Ansprüche 9 bis 12 die eine Dicke von 30 bis 70 µm und in den beiden Verstreckungsrichtungen einen Wärmeschrumpfungsgrad von 0,3 bis 0,6 %, gemessen nach einer Wärmebehandlung von 20 Sekunden bei 120° C, aufweist.

15. Trägerfolie nach einem der Ansprüche 13 oder 14, die eine Dicke von 40 bis 60 µm, vorzugsweise von etwa 50 µm, aufweist.

16. Trägerfolie nach einem der Ansprüche 13 bis 15, die auf beiden oberflächen eine Oberflächenenergie von zumindest 40 mJ/m² aufweist.

17. Trägerfolie nach einem der Ansprüche 13 bis 16, die aus Polyethylenterephthalat besteht.

## Claims

1. Process for the manufacture of a bent, in particular complexly bent, laminated safety glass pane which is free from optical faults caused by deformation in reflected and/or transmitted light, with a first glass pane, a corresponding second glass pane and a composite interlayer, which interlayer in the form of a film laminate consists of a first laminating film, a biaxially stretched thermoplastic substrate film provided with a thin-layer system and a second laminating film, with the features:
1.1) On the first laminating film is placed a substrate film provided with the thin-layer system which possesses:
1.11) a thickness of 30 to 70 µm and
1.12) in both directions of stretch, a thermal shrinkage of 0.3 to 0.6%, measured after a heat treatment of 20 seconds at 120°C,
- and on the substrate film is placed the second laminating film,
1.2) the films according to Feature 1.1) are arranged free from wrinkles between the two glass panes and are pressed as well as laminated to the glass panes with the application of pressure and heat,
where within the scope of the measures according to 1.1) and/or 1.2), at least one deaeration is carried out.

2. Process according to Claim 1, wherein a prelaminate consisting of the first laminating film and the substrate film is applied to the first glass pane, and the second laminating film is placed on that.

3. Process according to Claim 2, wherein after application of the prelaminate, prepressing is carried out with the application of pressure and heat, and afterwards the second laminating film is applied and pressed.

4. Process according to Claim 1, wherein the first glass pane, the first laminating film, the substrate film and the second laminating film, or a prelaminate consisting of these films is applied, and afterwards pressing is carried out.

5. Process according to one of Claims 1 to 4, wherein on the first laminating film is placed a substrate film which possesses a thickness of 40 to 60 µm, preferably of approximately 50 µm.

6. Process according to one of Claims 1 to 5, wherein on the first laminating film is placed a substrate film provided with the thin-layer system, this substrate film possessing on both surfaces a surface energy of at least 40 mJ/m²_{.}

7. Process according to one of Claims 1 to 6, wherein laminating films on the basis of polyvinylbutyral or ethylene/vinyl acetate and a substrate film of polyethylene terephthalate are used.

8. Process according to one of Claims 1 to 7, wherein pressing according to Feature 1.1) is carried out at a temperature in the range of 115 to 135°C at a maximum pressure of 13 bar.

9. Use of a substrate film which is provided with a thin-layer system of stretched thermoplastic material, which possesses a thickness of 30 to 70 µm, as well as biaxial stretching,
for the manufacture of laminated safety glass panes, especially for the manufacture of laminated safety glass panes free from optical faults caused by deformation in reflected and/or transmitted light, with a first glass pane, a corresponding second glass pane and a composite interlayer in the form of a film laminate consisting of a first laminating film, the biaxially stretched substrate film and a second laminating film
with the proviso that the substrate film possesses in both directions of stretch a thermal shrinkage of 0.3 to 0.6%, measured after heat treatment of 20 seconds at 120°C.

10. Use according to Claim 9 with the proviso that the substrate film possesses a thickness of 40 to 60 µm, preferably approximately 50 µm.

11. Use according to one of Claims 9 to 10 with the proviso that the substrate film possesses on both surfaces a surface energy of at least 40 mJ/m².

12. Use according to one of Claims 9 to 11, with the proviso that the substrate film consists of polyethylene terephthalate.

13. Stretched substrate film of thermoplastic material, provided with a thin-layer system, for implementation of the process in accordance with one of Claims 1 to 8, which possesses a thickness of 30 to 70 µm and, in both directions of stretch, a thermal shrinkage of 0.3 to 0.6%, measured after heat treatment of 20 seconds at 120°C.

14. Stretched substrate film of thermoplastic material, provided with a thin-layer system, for use in accordance with one of Claims 9 to 12, which possesses a thickness of 30 to 70 µm and, in both directions of stretch, a thermal shrinkage of 0.3 to 0.6%, measured after heat treatment of 20 seconds at 120°C.

15. Substrate film according to one of Claims 13 or 14, which possesses a thickness of 40 to 60 µm, preferably approximately 50 µm.

16. Substrate film according to one of Claims 13 to 15, which possesses on both surfaces a surface energy of at least 40 mJ/m².

17. Substrate film according to one of Claims 13 to 16, which consists of polyethylene terephthalate.

## Revendications

1. Procédé de préparation d'une plaque de verre feuilleté de sécurité pliée, en particulier pliée de façon complexe, exempte de défauts optiques dus à un gauchissement en lumière réfléchie et/ou réfractée comprenant une première plaque de verre, une seconde plaque de verre correspondante et une couche intermédiaire multicouches, laquelle couche intermédiaire a la forme d'un stratifié de feuilles, étant constituée par une première feuille composite, une feuille de support thermoplastique étirée biaxialement, munie d'un système de couche mince, et par une seconde feuille composite, ayant les caractéristiques suivantes :
1.1) sur la première feuille composite, on dispose une feuille de support munie d'un système de couche mince, qui présente
1.11) une épaisseur de 30 à 70 µm et
1.12) dans les deux sens d'étirement, un degré de retrait à la chaleur de 0,3 à 0,6 %, mesuré après un traitement thermique de 20 secondes à 120°C,
et sur la feuille de support, on dispose la seconde feuille composite
1.2) on dispose les feuilles selon la caractéristique 1.1), sans faire de pli, entre les deux plaques de verre et on les soumet à un pressage par application de pression et de chaleur et on les assemble ainsi avec les plaques de verre,
au moins une désaération étant effectuée dans le cadre des mesures définies selon 1.1) et/ou 1.2).

2. Procédé selon la revendication 1, dans lequel on dépose, sur la première plaque de verre, un préstratifié constitué par la première feuille composite et la feuille de support, et on y dépose dessus la seconde feuille composite.

3. Procédé selon la revendication 2, dans lequel, après avoir déposé le préstratifié, on effectue un prépressage avec l'application de pression et de chaleur et ensuite, on dépose la seconde feuille de stratifié et on effectue le pressage.

4. Procédé selon la revendication 1, dans lequel on dépose sur la première plaque de verre la première feuille composite, la feuille de support et la seconde feuille composite ou un préstratifié de ces feuilles, et ensuite, on effectue le pressage.

5. Procédé selon l'une quelconque des revendications 1 à 4, dans lequel on dépose sur la première feuille composite une feuille de support qui présente une épaisseur de 40 à 60 µm, de préférence d'environ 50 µm.

6. Procédé selon l'une quelconque des revendications 1 à 5, dans lequel on dépose sur la première feuille composite une feuille de support munie du système de couche mince, laquelle présente sur les deux faces une énergie superficielle d'au moins 40 mJ/m².

7. Procédé selon l'une quelconque des revendications 1 à 6, selon lequel on travaille avec des feuilles composites à base de polyvinylbutyral ou d'éthylène-acétate de vinyle, et avec une feuille de support en téréphtalate de polyéthylène.

8. Procédé selon l'une quelconque des revendications 1 à 7, dans lequel le pressage selon la caractéristique 1.1) est effectué à une température comprise entre 115 et 135°C, sous une pression maximale de 13 bars.

9. Utilisation d'une feuille de support munie d'un système de couche mince, constituée par une matière thermoplastique étirée qui présente une épaisseur de 30 à 70 µm ainsi qu'un étirement biaxial,
pour la préparation de plaques de verre feuilleté de sécurité, en particulier de plaques de verre feuilleté, exemptes de défauts optiques dus à un gauchissement en lumière réfléchie et/ou réfractée, comprenant une première plaque de verre, une seconde plaque de verre correspondante et une couche intermédiaire multicouches ayant la forme d'un stratifié de feuilles, constituée par une première feuille composite, la feuille de support étirée biaxialement et une seconde feuille composite,
sous réserve que la feuille de support présente, dans les deux sens d'étirement, un degré de retrait à la chaleur de 0,3 à 0,6 %, mesuré après un traitement thermique de 20 secondes à 120°C.

10. Utilisation selon la revendication 9, sous réserve que la feuille de support présente une épaisseur de 40 à 60 µm, de préférence d'environ 50 µm.

11. Utilisation selon l'une quelconque des revendications 9 à 10, sous réserve que la feuille de support présente, sur ses deux faces, une énergie superficielle d'au moins 40 mJ/m².

12. Utilisation selon l'une quelconque des revendications 9 à 11, sous réserve que la feuille de support soit constituée par du téréphtalate de polyéthylène.

13. Feuille de support munie d'un système de couche mince, étirée, en une matière thermoplastique, destinée à la mise en oeuvre du procédé selon l'une quelconque des revendications 1 à 8, qui présente une épaisseur de 30 à 70 µm et dans les deux sens d'étirement, un degré de retrait à la chaleur de 0,3 à 0,6 %, mesuré après un traitement thermique de 20 secondes à 120°C.

14. Feuille de support munie d'un système de couche mince, étirée, en une matière thermoplastique, destinée à l'utilisation selon l'une quelconque des revendications 9 à 12, qui présente une épaisseur de 30 à 70 µm et dans les deux sens d'étirement un degré de retrait à la chaleur de 0,3 à 0,6 %, mesuré après un traitement thermique de 20 secondes à 120°C.

15. Feuille de support selon l'une quelconque des revendications 13 ou 14, qui présente une épaisseur de 40 à 60 µm, de préférence d'environ 50 µm.

16. Feuille de support selon l'une quelconque des revendications 13 à 15, qui présente sur ses deux faces une énergie superficielle d'au moins 40 mJ/m².

17. Feuille de support selon l'une quelconque des revendications 13 à 16, qui est constituée par du téréphtalate de polyéthylène.
